# EUROPÄISCHE PATENTANMELDUNG

(11) **EP 1 386 698 A1**
(43) Veröffentlichungstag der Anmeldung: **04.02.2004**
(21) Anmeldenummer: 02450167.8
(22) Anmeldetag: 29.07.2002
(51) Int. Cl.: B25J 9/16, G05B 19/425

(54) **Vorrichtung zum Programmieren von Industrierobotern**

(71) Anmelder: igm Robotersysteme AG, 2355 Wiener Neudorf (AT)
(72) Erfinder: Vogel, Andreas, 1110 Wien (AT)
(74) Vertreter: Beer, Manfred, Dipl.-Ing.

(57) **Zusammenfassung**

Eine Vorrichtung zum off-line Eingeben des Arbeitsablaufes von Industrierobotern (1) weist einen Rechner (4), auf dem ein Simulationsprogramm des Industrieroboters (1) läuft, und einen Bildschirm (5) zum Anzeigen des eingegebenen Arbeitsablaufes auf. Zum Eingeben des gewünschten Arbeitsablaufes ist ein an den Rechner (4) angeschlossenes Bedienhandgerät (3) vorgesehen, das im wesentlichen dem Bedienhandgerät (3) des Industrieroboters (1) entspricht. Da das Bedienhandgerät (3) des Industrieroboters (1) bzw. ein diesem entsprechendes Bedienhandgerät (3a) zum Eingeben des Arbeitsablaufes verwendet wird, kann die im Umgang mit dem Industrieroboter (1) geübte Bedienungsperson eingesetzt werden, den Arbeitsablauf so wie on-line am Industrieroboter (1) einzugeben.

## Beschreibung

Die Erfindung betrifft eine Vorrichtung zum off-line Eingeben des Arbeitsablaufes von Industrierobotern mit einem Rechner, auf dem ein Simulationsprogramm des Industrieroboters läuft, mit einer Einrichtung zum Eingeben des gewünschten Arbeitsablaufes und mit einem Bildschirm zum Anzeigen des eingegebenen Arbeitsablaufes.

Industrieroboter, beispielsweise Schweißroboter, müssen häufig komplizierte Bewegungsabläufe ausführen, wobei es im wesentlichen zwei bekannte Möglichkeiten gibt, dem Industrieroboter diesen Arbeitsablauf zu lehren.

Eine Möglichkeit besteht darin, den Industrieroboter unmittelbar über ein an die Steuerung des Industrieroboters angeschlossenes Bedienhandgerät zu steuern und relevante Punkte des Bewegungsablaufes zu speichern. Mit anderen Worten führt der Industrieroboter, von einer Bedienungsperson gesteuert, in einem Lehrvorgang unmittelbar jenen Bewegungsablauf aus, den er anschließend im Betrieb ausführen soll, wobei dieser Arbeitsablauf während der Lehrfahrt gespeichert wird. Dieses Verfahren ist, da es je nach Komplexität und Dauer des zu speichernden Arbeitsablaufes relativ lange dauern kann, nicht besonders wirtschaftlich, da der Industrieroboter in dieser Zeit nicht für seinen eigentlichen Arbeitszweck eingesetzt werden kann. Überdies ist dieser Vorgang auch mit gewissen Gefahren für die Bedienungsperson verbunden, da diese sich im unmittelbaren Arbeitsbereich des Industrieroboters aufhält.

Es gibt daher auch schon Lösungen für dieses Problem, bei denen der Industrieroboter bzw. dessen Bewegungen mittels eines Programmes auf einem Rechner simuliert werden, so dass der Arbeits- bzw. Bewegungsablauf unabhängig vom eigentlichen Industrieroboter, also off-line, eingegeben und gespeichert wird. Auch dieses Verfahren bringt Nachteile mit sich. Soferne das Simulationsprogramm von der Bedienungsperson des Industrieroboters, also beispielsweise dem Schweißer, bedient wird, muss dieser sowohl in das Simulationsprogramm eingeschult werden, als auch den häufig ungewohnten Umgang mit einer PC-Tastatur und einer PC-Maus erlernen. Soferne es sich bei der Person, die den Arbeitsablauf am Simulationsprogramm eingibt, um eine andere, mit dem Umgang im Industrieroboter ungeübte und mit dessen Funktion nicht vollständig vertraute Person handelt, besteht wiederum die Gefahr, dass der Arbeitsablauf nicht optimal eingegeben wird oder dass sogar eine Beschädigung von Werkzeug oder Werkstück oder eine nicht zufriedenstellende Ausführung der Arbeit zu befürchten ist.

Der Erfindung liegt die Aufgabe zu Grunde, diese Nachteile soweit wie möglich zu vermeiden.

Gelöst wird diese Aufgabe erfindungsgemäß mit einer Vorrichtung mit den Merkmalen des Anspruches 1.

Da bei der erfindungsgemäßen Vorrichtung das Eingeben des Arbeitsablaufes off-line an einem vom Industrieroboter getrennten Rechner erfolgt, muss kein unerwünschter Stillstand des Industrieroboters während des Eingebens des Arbeitsablaufes in Kauf genommen werden. Da auf der anderen Seite das Bedienhandgerät des Industrieroboters oder ein entsprechendes Gerät zum Eingeben des Arbeitsablaufes verwendet wird, kann die im Umgang mit dem Industrieroboter geübte Bedienungsperson eingesetzt werden, den Arbeitsablauf einzugeben, ohne dass ein Umschulen dieser Bedienungsperson erforderlich wäre.

Es versteht sich, dass es sich bei dem Bedienhandgerät zum Eingeben auf dem Rechner nicht um ein Bedienhandgerät handeln muss, das mit dem Bedienhandgerät am Industrieroboter vollständig übereinstimmt. Beispielsweise muss ein am Bedienhandgerät des Industrieroboters üblicherweise vorgesehener NOT-AUS-Schalter nicht vorgesehen sein. Wesentlich ist vielmehr, dass das zum Eingeben am Rechner vorgesehene Bedienhandgerät hinsichtlich der Eingabetastatur und -funktionen mit dem Bedienhandgerät des Industrieroboters übereinstimmt, so dass die Bedienungsperson in dieser Hinsicht nicht umlernen muss. Soferne das Bedienhandgerät des Industrieroboters auch eine Anzeige für den Programmablauf des Industrieroboters aufweist, ist es natürlich ebenfalls von Vorteil, wenn das Bedienhandgerät zum Eingeben am Rechner ebenfalls ein derartiges Display aufweist. Denkbar ist aber ebenso, dass dieses Display am Bedienhandgerät für den Rechner nicht vorhanden ist und die Anzeige der entsprechenden Daten beispielsweise in einem Fenster auf dem Bildschirm des Rechners erfolgt.

In einer bevorzugten Ausführungsform der Erfindung kann der Rechner über eine Datenleitung mit der Steuerung des Industrieroboters verbindbar sein. Bei dieser Datenleitung kann es sich beispielsweise um eine Netzwerkverbindung handeln. Eine derartige unmittelbare Verbindung zwischen dem Rechner und der Steuerung des Industrieroboters bietet nicht nur den Vorteil, dass der am Rechner über das Simulationsprogramm eingegebene Arbeitsablauf direkt in die Steuerung des Industrieroboters übertragen werden kann, sondern es ist auch möglich, den Industrieroboter während des Eingebens am Rechner ebenfalls den Arbeitsablauf ausführen zu lassen und über eine "Rückleitung" die tatsächlichen Bewegungen bzw. Abläufe am Industrieroboter über den Rechner am Bildschirm darzustellen. Der Arbeitsablauf des parallel angeschlossenen Industrieroboters wird somit tatsächlich on-line am Bildschirm dargestellt,

In einer Ausführungsform der Erfindung kann beispielsweise vorgesehen sein, dass das Bedienhandgerät eine Schnittstelle zum Anschluss an die Steuerung des Industrieroboters und eine weitere Schnittstelle zum Anschluss an den Rechner aufweist. Diese weitere zweite Schnittstelle wird in der Praxis nicht als solche ausgeführt sein. Dies ist mehr als Funktion zu sehen, dass das Bedienhandgerät entweder am Rechner oder an die Steuerung angeschlossen werden kann, nicht gleichzeitig an beide Geräte.

Weitere bevorzugte Ausführungsformen der Erfindung sind Gegenstand der übrigen Unteransprüche.

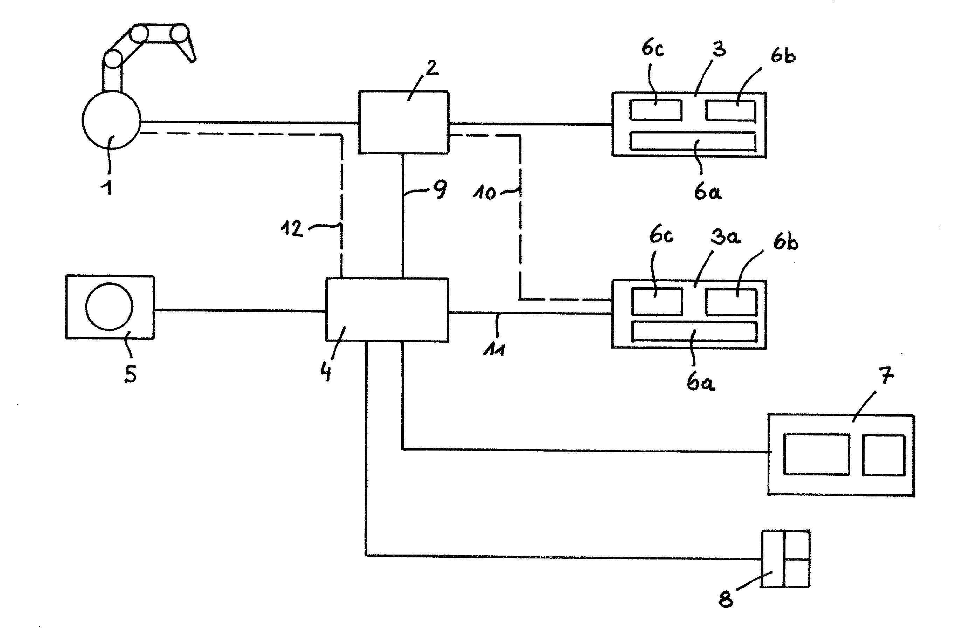

Nachfolgend wird eine bevorzugte Ausführungsform der Erfindung mit Bezugnahme auf die beiliegende Zeichnung näher erläutert.

In der Zeichnung ist schematisch ein Industrieroboter 1, beispielsweise ein Schweißroboter, dargestellt, dessen Arbeitsablauf über eine Steuerung 2 gesteuert wird. An die Steuerung 2 ist ein Bedienhandgerät 3 angeschlossen, mit dessen Hilfe der Roboter 1 on-line gesteuert werden kann und über welches des weiteren ein Arbeitsablauf eingegeben werden kann, der dann von der Steuerung 2 automatisch ausgeführt wird. Mit 4 ist ein Rechner, beispielsweise ein PC, bezeichnet, auf dem ein Simulationsprogramm gespeichert ist und abläuft, das den eingabeabhängigen Arbeitsablauf des Roboters 1 nachbildet.

An den Rechner 4 ist ein Bildschirm 5 zur Darstellung des Industrieroboters 1 bzw. dessen Arbeitsablaufes angeschlossen. Zur Dateneingabe ist an den Rechner 4 ein Bedienhandgerät 3a angeschlossen, das idealerweise dem Bedienhandgerät 3 entspricht, das unmittelbar an die Steuerung 2 des Roboters 1 angeschlossen ist. Ein derartiges Bedienhandgerät 3, 3a weist beispielsweise Bedienfelder 6a und 6b mit Tasten und/oder Schaltern auf, die zum Bedienen des Industrieroboters 1, insbesondere zum Bewegen des Roboters 1, Eingeben, Speichern und Löschen von Daten, dienen. Ein derartiges Bedienhandgerät 3, 3a weist des weiteren üblicherweise ein Display 6c auf, das z.B. den aktuellen Stand des Programmablaufes oder interaktive Meldungen oder Eingabeaufforderungen für die Bedienungsperson anzeigt. Das Bedienhandgerät 3, 3a kann schließlich auch noch sicherheitsrelevante Elemente, wie z.B. einen NOT-AUS-Schalter od.dgl., aufweisen.

An den Rechner 4 sind des weiteren noch eine übliche PC-Tastatur und eine PC-Maus sowie bei Bedarf weitere an sich übliche Peripheriegeräte, wie z.B. ein Drucker angeschlossen.

Das Simulationsprogramm, das auf dem Rechner 4 läuft, enthält als Komponente vorzugsweise eine sogenannte Realwiedergabe des eigentlichen Steuerungs- bzw. Roboterprogramms, das in der Steuerung 2 läuft. Auf diese Weise ist gewährleistet, dass der am Bildschirm 5 dargestellte Arbeitsablauf des Roboters mit dem realen Arbeitsablauf des Roboters 1 so weit wie möglich übereinstimmt.

Soll nun ein neuer Arbeitsablauf für einen Industrieroboter 1 erstellt oder ein vorhandener Arbeitsablauf geändert werden, werden die relevanten Programme und Daten mit Hilfe der Tastatur 7 und der Maus 8 in den Rechner 4 geladen. Die Bedienungsperson, die normalerweise den neuen oder geänderten Arbeitsablauf über das Bedienhandgerät 3 on-line in die Steuerung 2 des Industrieroboters 1 eingeben würde, ist bei der Erfindung in der Lage, über ein korrespondierendes Bedienhandgerät 3a dieselbe Funktion zu erfüllen, indem dies über den Rechner 4 und die Bildschirmanzeige 5 off-line erfolgt. Der Vorteil der erfindungsgemäßen Anordnung liegt, wie bereits erwähnt darin, dass dadurch einerseits der Industrieroboter nicht während der Eingabe stillsteht und anderseits die Bedienungsperson mit dem bekannten und vertrauten Bedienhandgerät arbeiten kann.

In der Zeichnung ist eine Datenleitung 9 dargestellt, die der wahlweisen, unmittelbaren Verbindung, beispielsweise über ein Internet oder Intranet, zwischen dem Rechner 4 und der Steuerung 2 des Roboters 1 dient. Auf diese Weise können nicht nur Programme oder Betriebsdaten zwischen der Steuerung 2 und dem Rechner 4 ausgetauscht werden, sondern es ist auch möglich, den realen Arbeitsablauf des Roboters 1, gesteuert über das Bedienhandgerät 3a, das an den Rechner 4 angeschlossen ist, am Bildschirm 5 darzustellen. Auf diese Weise können z.B. Ungenauigkeiten oder Fehler im Roboterprogramm auf einfache Weise aufgezeigt und korrigiert werden.

Soweit die direkte Steuerung des Roboters 1 über das an den Rechner 4 angeschlossene Bedienhandgerät 3a betroffen ist, besteht beispielsweise die Möglichkeit, über parallele Leitungen 10 und 11 direkt sowohl die Robotersteuerung 2 als auch den Rechner 4 anzusteuern. Alternativ ist es auch möglich, über eine Leitung 12 den Industrieroboter 1 nicht über dessen Steuerung 2, sondern direkt vom Rechner 4 aus anzusteuern.

Zusammenfassend kann ein Ausführungsbeispiel der Erfindung wie folgt dargestellt werden:
Eine Vorrichtung zum off-line Eingeben des Arbeitsablaufes von Industrierobotern 1 weist einen Rechner 4, auf dem ein Simulationsprogramm des Industrieroboters 1 läuft, und einen Bildschirm 5 zum Anzeigen des eingegebenen Arbeitsablaufes auf. Zum Eingeben des gewünschten Arbeitsablaufes ist ein an den Rechner 4 angeschlossenes Bedienhandgerät 3 vorgesehen, das im wesentlichen dem Bedienhandgerät 3 des Industrieroboters 1 entspricht. Da das Bedienhandgerät 3 des Industrieroboters 1 bzw. ein diesem entsprechendes Bedienhandgerät 3a zum Eingeben des Arbeitsablaufes verwendet wird, kann die im Umgang mit dem Industrieroboter 1 geübte Bedienungsperson eingesetzt werden, den Arbeitsablauf so wie on-line am Industrieroboter 1 einzugeben.

## Patentansprüche

1. Vorrichtung zum off-line Eingeben des Arbeitsablaufes von Industrierobotern (1) mit einem Rechner (4), auf dem ein Simulationsprogramm des Industrieroboters (1) läuft, mit einer Einrichtung (3a) zum Eingeben des gewünschten Arbeitsablaufes und mit einem Bildschirm (5) zum Anzeigen des eingegebenen Arbeitsablaufes, **dadurch gekennzeichnet, dass** die Einrichtung zum Eingeben des Arbeitsablaufes im wesentlichen einem Bedienhandgerät (3a) des Industrieroboters (1) entspricht.

2. Vorrichtung nach Anspruch 1, **dadurch gekennzeichnet, dass** der Rechner (4) über eine Datenleitung (9) mit der Steuerung (2) des Industrieroboters (1) verbindbar ist.

3. Vorrichtung nach Anspruch 1 oder 2, **dadurch gekennzeichnet, dass** das Simulationsprogramm dem Steuerprogramm des Industrieroboters (1) entspricht.

4. Vorrichtung nach Anspruch 2 oder 3, **dadurch gekennzeichnet, dass** das Simulationsprogramm während der Eingabe des Arbeitsablaufes über das Steuerprogramm des Industrieroboters (1) mit diesem verbunden ist und dass die tatsächlichen Bewegungen des Industrieroboters (1) auf dem Bildschirm (5) angezeigt werden.

5. Vorrichtung nach einem der Ansprüche 1 bis 4, **dadurch gekennzeichnet, dass** das Bedienhandgerät (3, 3a) eine Anzeige für den Programmablauf des Industrieroboters aufweist.

6. Vorrichtung nach einem der Ansprüche 1 bis 5, **dadurch gekennzeichnet, dass** das Bedienhandgerät (3, 3a) eine Schnittstelle (10) zum Anschluss an die Steuerung (2) des Industrieroboters (1) und eine weitere Schnittstelle (11) zum Anschluss an den Rechner (4) aufweist.
